# EUROPEAN PATENT APPLICATION

(11) **EP 4 625 600 A1**
(43) Date of publication of application: **01.10.2025**
(21) Application number: 24222909.4
(22) Date of filing: 23.12.2024
(51) Int. Cl.: H01M 10/42, B60L 50/64, H01M 50/249, H01M 50/271, H01M 50/583, H01M 50/284, H01M 50/287

(54) **BATTERY PACK AND WORKING VEHICLE**

(30) Priority: 29.03.2024 JP 2024057112
(71) Applicant: Takeuchi MFG. Co., Ltd., Hanishina-gun, Nagano 389-0605 (JP)
(72) Inventor: Matsumoto, Tetsuya, Nagano, 389-0605 (JP); Takao, Ryutaro, Kanagawa, 252-5293 (JP)
(74) Representative: Liesegang, Eva

(57) **Abstract**

Provided is a battery pack that is used in a working vehicle where an operator can easily get access to an electric component housing chamber in which an electric component is housed thus enhancing the maintenance property of the electric component. A battery pack includes a battery module, electric components, and a housing that houses the battery module and the electric components. The housing includes an electric component housing chamber that houses the electric components. The electric component housing chamber includes: an opening portion that enables an operator to get access to the electric component housing chamber from the outside; and a maintenance cover that is configured to be capable of closing the opening portion. The maintenance cover is mounted on the housing by a hinge.

## Description

### [Technical Field]

The present invention relates to a battery pack and a working vehicle.

### [Background Art]

In a field of a working vehicle such as a construction machine, a working vehicle that performs working and travels by an electric motor has started to be popularly used. In the working vehicle that performs working and travels by the electric motor, as a power source of the electric motor, a battery pack is mounted on a vehicle.

Fig. 7 is a view illustrating a battery pack 970 that is described in patent literature JP-A-2017-91963 and is mounted on a working vehicle. The battery pack 970 includes: a sealed battery case 971 that is formed of a front case portion 971a and a rear case portion 971b; and a horizontal partition wall 975 that partitions the inside of the front case portion 971a vertically into a first space S901 and a second space S902, and partitions the inside of the rear case portion 971b vertically into a third space S903 and a fourth space S904; an electric equipment unit 974; and a battery module 973.

The electric equipment unit 974 is housed in one space out of the first space S901, the second space S902, the third space S903 and the fourth space S904. The battery module 973 is housed in the remaining space in which the electric unit 974 is not housed out of the first space S901, the second space S902, the third space S903 and the fourth space S904.

The battery pack 970 suppresses the intrusion of a foreign substances from the outside and maintains a uniform temperature in a space of the battery case 971 thus effectively operating respective battery modules.

### [Citation List]

### [Patent document]

[Patent document 1] JP-A-2017-91963

### [Summary of Invention]

### [Technical Problem]

However, with respect the battery pack 970 described in patent literature JP-A-2017-91963, it is difficult to say that a sufficient consideration is taken relating to the maintenance of an electric unit 974 that is disposed in a housing of the battery pack 970.

That is, the electric unit 974 is housed in the battery case 971 that is a sealed space, and the battery pack 970 is disposed within a range from a position at which a rear wheel of the working vehicle is disposed to a position at a rear end of the working vehicle. Accordingly, to perform the maintenance in a state where the electric unit 974 is being mounted on the working vehicle, the rear wheel impairs such maintenance operation. Accordingly, it is necessary to remove the battery pack from the working vehicle and to perform the maintenance operation.

It is cumbersome to remove the battery pack from the working vehicle and to mount the battery pack on the working vehicle after the maintenance operation is finished each time the maintenance operation is performed.

The present invention has been made to overcome such drawbacks, and it is an object of the present invention to provide a battery pack that enables an operator to easily get access to an electric component housing chamber (electric component unit) in which an electric component is housed thus enhancing the maintenance property of the electric component. It is another object of the present invention to provide a working vehicle that includes such a battery pack.

### [Solution to problem]

[1] A battery pack according to this disclosure includes a battery module, an electric component, and a housing that houses the battery module and the electric component. The housing includes an electric component housing chamber that houses the electric component. The electric component housing chamber has an opening portion in order to get access to the electric component housing chamber from an outside thereof and a maintenance cover that is configured to be capable of the closing the opening portion. The maintenance cover is mounted on the housing by a hinge.
[2] In the battery pack according to this disclosure, it is preferred that the electric component includes a fuse or a contactor, and the electric component be disposed on a surface of the maintenance cover that is opposite the electric component housing chamber.
[3] In the battery pack according to this disclosure, it is preferred that the electric component includes a board on which an integrated circuit is mounted; and the board be disposed on a wall of the electric component housing chamber.
[4] In the battery pack according to this disclosure, it is preferred that the maintenance cover is disposed at a position higher than a lower end of an opening formed, when a battery cover is opened in a working vehicle, in a state where the battery pack is mounted on the working vehicle.
[5] A working vehicle according to this disclosure includes a battery pack that includes: a battery module; an electric component; and a housing that houses the battery module and the electric component. The housing includes an electric component housing chamber that houses the electric component. The electric component housing chamber has: an opening portion in order to get access to the electric component housing chamber from an outside thereof and a maintenance cover that is configured to be capable of closing the opening portion, and the maintenance cover is mounted on the housing by a hinge.

### [Advantageous effect of the Invention]

The battery pack for a working vehicle according to the present invention includes the electric component housing chamber that houses the electric component, and the electric component housing chamber includes the opening portion in order to get access to the electric component housing chamber from the outside thereof, and the maintenance cover that is configured to be capable of closing the opening portion. With such a configuration, the maintenance of the electric component housed in the electric component housing chamber can be performed without removing the battery pack from the working vehicle. Further, the maintenance cover is mounted on the housing by the hinge. Accordingly, it is unnecessary to make a place to store the maintenance cover while performing the maintenance by opening the maintenance cover. According to the battery pack for a working vehicle according to the present invention, an operator can easily get access to the electric component housing chamber and hence, it is possible to provide the battery pack that is used in the working vehicle that enhances the maintenance property of the electric component.

The working vehicle according to the present invention includes the battery pack having the electric component housing chamber that houses the electric component. The electric component housing chamber includes the opening portion in order to get access to the electric component housing chamber from the outside thereof, and the maintenance cover that is configured to be capable of closing the opening portion. With such a configuration, the maintenance of the electric component housed in the electric component housing chamber can be performed without removing the battery pack from the working vehicle. Further, maintenance cover is mounted on the housing by the hinge. Accordingly, it is unnecessary to make a place to store the maintenance cover while performing the maintenance by opening the maintenance cover. According to the battery pack for a working vehicle according to the present invention, an operator can easily get access to the electric unit and hence, it is possible to provide the working vehicle that enhances the maintenance property of the electric unit.

### [Brief Description of Drawings]

Fig. 1 is a view illustrating a working vehicle 1 that includes a battery pack 70 according to an embodiment.
Fig. 2 is a view illustrating the working vehicle 1 that includes the battery pack 70 according to the embodiment, and also is a view illustrating a state where a battery cover 22 is opened.
Fig. 3 is a view illustrating the battery pack 70 according to the embodiment.
Fig. 4 is a view illustrating the battery pack 70 according to the embodiment.
Fig. 5 is a schematic view illustrating the structure of the battery pack 70 according to the embodiment.
Fig. 6 is a view illustrating a hinge 76 that can be preferably used in the battery pack 70 according to the embodiment.

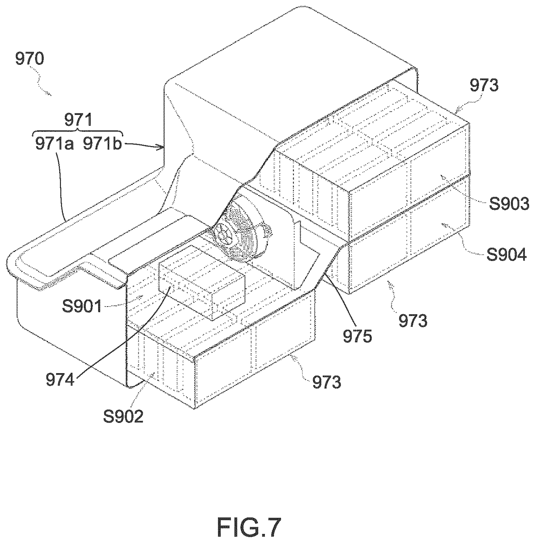

Fig. 7 is a view illustrating a battery pack 970 mounted on an electric working vehicle according to a prior art.

### [Description of embodiments]

Hereinafter, a mode for carrying out the invention (hereinafter, referred to as "embodiment") is described. The embodiment described hereinafter is a preferred mode for carrying out the invention, and is not limited to the invention according to claims. Further, it is not always the case that all of respective constitutional elements described in the embodiment and the combinations of these constitutional elements are indispensable in the present invention.

Hereinafter, a battery pack 70 and a working vehicle 1 according to the embodiment of the present invention are described with reference to drawings. In the embodiment described hereinafter, the description is made by taking a crawler type hydraulic excavator as one example of the working vehicle.

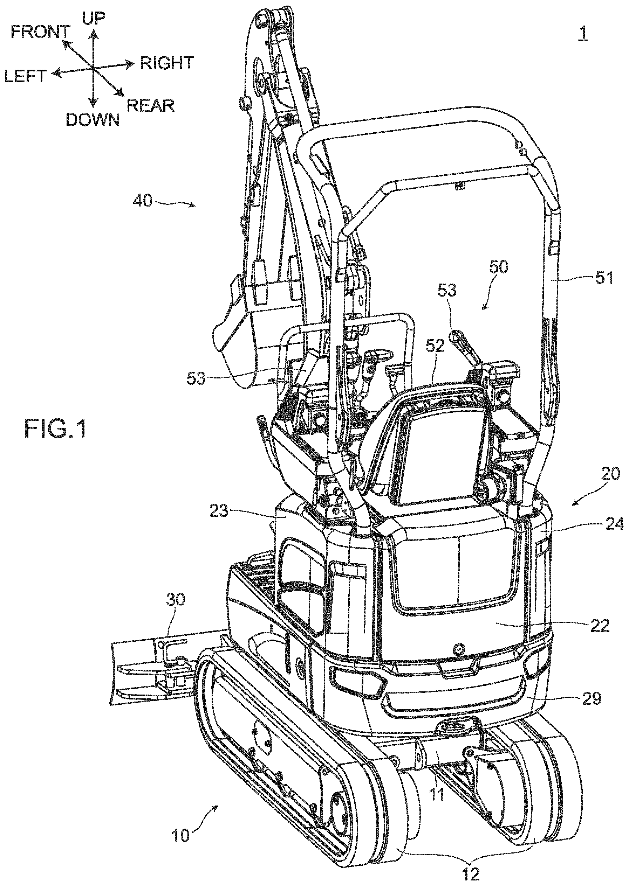

First, the external configuration of the working vehicle 1 according to the embodiment is described with reference to Fig. 1. The external configuration of the working vehicle 1 according to the embodiment does not constitute the gist of the present invention and hence, only the configuration is described only schematically. Further, in the respective drawings for describing the embodiment, members having identical functions are given with the same symbols, and there may be a case where the repeated description of the members is omitted.

Further, in a case where it is necessary to indicate the left and the right, the front and the rear and the up and the down of the working vehicle 1 in describing the working vehicle 1 according to the embodiment, the side on which a blade 30 is mounted on the working vehicle 1 is set as "front", and a side opposite to the side on which the blade 30 is mounted on the working vehicle 1 is set as "rear". Further, a side on a left side surface of the working vehicle 1 when working vehicle 1 is viewed from a rear side is set as "left", and a side on a right side surface of the working vehicle 1 when the working vehicle 1 is viewed from the rear side in the same manner is set as "right". Further, a bottom portion side of the working vehicle 1 is set as "down", and a side opposite to the bottom portion is set as "up".

### 1. Embodiment

### 1.1. Working vehicle

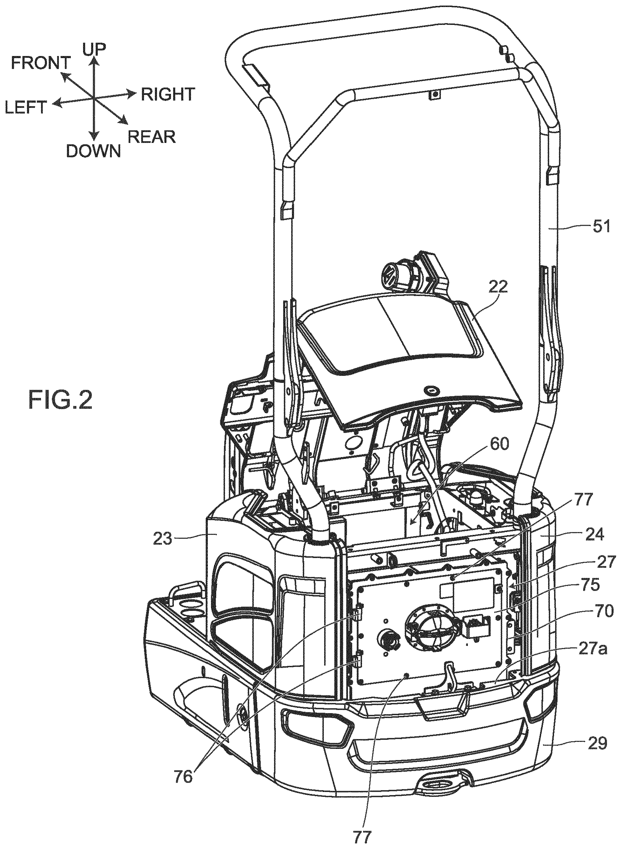

Fig. 1 is a view illustrating a working vehicle 1 that includes a battery pack 70 according to an embodiment. Fig. 1 is a perspective view of the working vehicle 1 as viewed from a left rear side. Fig. 2 is a view illustrating the working vehicle 1 that includes the battery pack 70 according to the embodiment. In Fig. 2, a state is illustrated where a battery cover 22 of the working vehicle 1 is opened so that a portion of the battery pack 70 appears. Further, in Fig. 2, the illustration of a lower traveling body 10, the blade 30 and a working device 40 is omitted.

As illustrated in Fig. 1, the working vehicle 1 includes: the lower traveling body 10, an upper slew body 20 that is mounted on an upper portion of the lower traveling body 10 in a slewable manner; the blade 30 mounted on a front portion of the lower traveling body 10; and the working device 40 that is mounted on a front portion of the upper slew body 20.

The lower traveling body 10 includes a pair of left and right crawlers 12 on both left and right sides of a frame 11. The blade 30 that is swingable vertically is mounted on the frame 11. A slew mechanism (not illustrated in the drawing) is mounted on an approximately center portion of an upper portion of the frame 11. The upper slew body 20 is slewable on a horizontal plane by the slew mechanism. The lower traveling body 10, the upper slew body 20, the blade 30 and the working device 40 are driven by corresponding hydraulic actuators (a hydraulic motor, a hydraulic cylinder and the like) respectively.

An upper surface, a rear surface, a left side surface, a right side surface and the front surface of the upper slew body 20 are covered by covers respectively, and an equipment housing space 60 (see Fig. 2) is formed in the upper slew body 20. Assume a cover that covers the upper surface and the rear surface as a battery cover 22, and covers that cover the left side surface, the right side surface and the front surface as a left side surface cover 23, a right side surface cover 24, and a front surface cover (not illustrated in the drawing) respectively. The equipment housing space 60 is a space surrounded by the battery cover 22, the left side surface cover 23, forms the right side surface cover 24 and the front surface cover.

A canopy-type cabin 50 is mounted on an upper portion of the battery cover 22. In the cabin 50, a canopy pole 51, an operator seat 52 and an operating lever 53 are disposed. On a lower portion of a rear surface of the upper slew body 20, a counterweight 29 that forms a portion of the rear surface is mounted.

In the equipment housing space 60, the battery pack 70 is housed. In the equipment housing space 60, various equipment for operating the working vehicle 1, hydraulic pipes, electric wires (none of these components illustrated in the drawing) are housed. In the small-sized working vehicle 1, in general, the equipment housing space 60 is small. Accordingly, in the equipment housing space 60, various equipment, the hydraulic pipes, the electric wires and the like are housed with high-density.

### 1.2 Battery pack

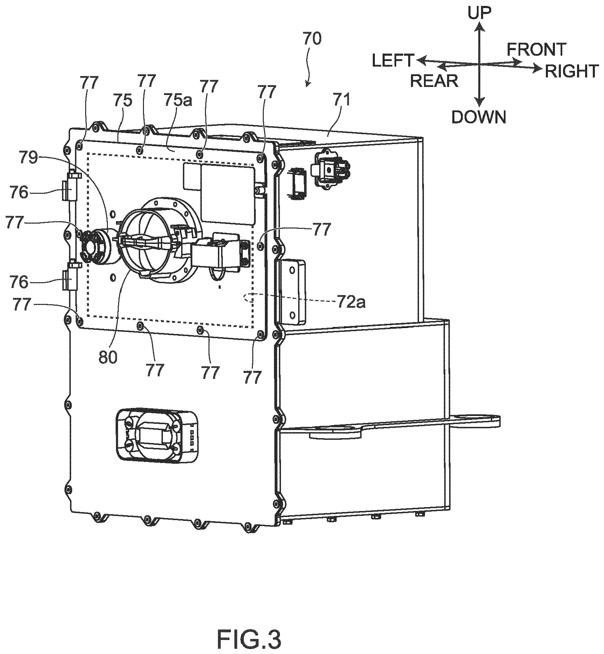

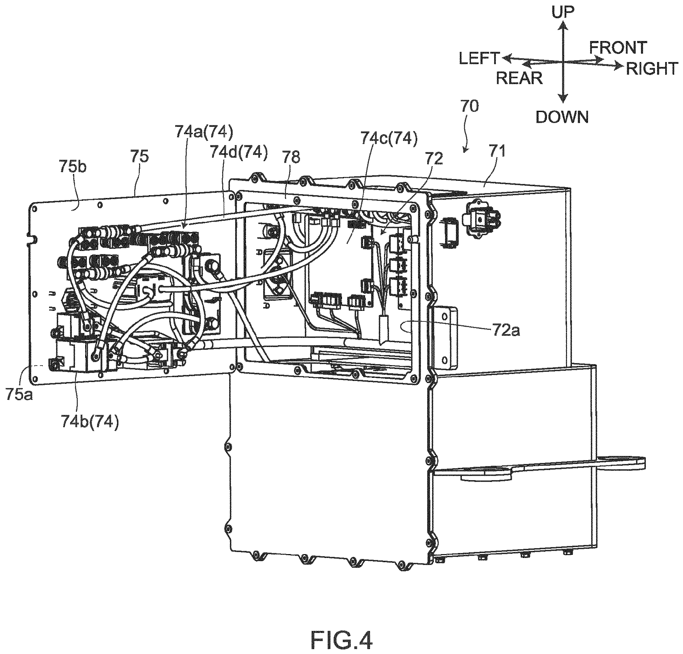

Fig. 3 is a view illustrating the battery pack 70 according to the embodiment. Fig. 3 illustrates a state where a maintenance cover 75 of the battery pack 70 is closed. Fig. 4 is a view illustrating the battery pack 70 according to the embodiment. Fig. 4 illustrates a state where the maintenance cover 75 of the battery pack 70 is opened.

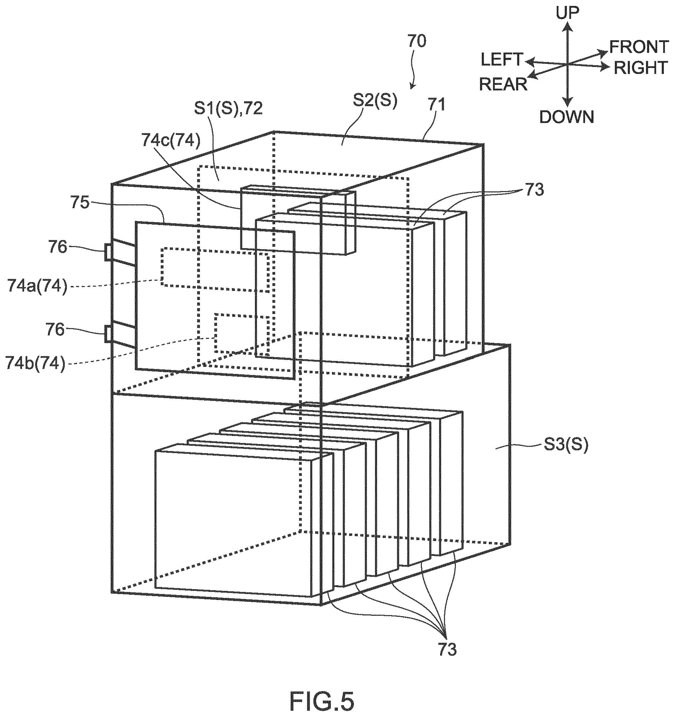

Fig. 5 is a conceptual view illustrating the structure of the battery pack 70 according to the embodiment. Fig. 5 illustrates a perspective view of the working vehicle 1 as viewed from a right rear side in a state where the battery pack 70 is placed on the working vehicle 1, and some of components disposed in the battery pack 70 are displayed in a see-through manner.

As illustrated in Fig. 3 to Fig. 5, the battery pack 70 includes battery modules 73, electric components 74 and a housing 71. The battery modules 73 and the electric components 74 are housed in the housing 71.

### 1.2.1. Housing

As illustrated in Fig. 5, the housing 71 has a space S therein. The space S is partitioned into three spaces S1, S2, S3.

The space S1 is a space positioned on an upper side of the space S, and is a space positioned behind the working vehicle 1 when the battery pack 70 is placed on the working vehicle 1. The space S2 is a space positioned in an upper portion of the space S, and is a space that is positioned in front of the working vehicle 1 when the battery pack 70 is placed on the working vehicle 1. The space S3 is a space positioned on a lower side of the space S.

The electric components 74 are housed in the space S1. A periphery of the space S1 is surrounded by a wall. The space S1 in which the electric components 74 are housed constitutes an electric component housing chamber 72. The electric component housing chamber 72 forms a space independent from the space S2 and the space S3. Hereinafter, space S1 is referred to as the electric component housing chamber 72.

As illustrated in Fig. 3 and Fig. 4, the electric component housing chamber 72 has an opening portion 72a and the maintenance cover 75. In Fig. 3, the opening portion 72a is disposed behind the maintenance cover 75 so that the maintenance cover 75 is not viewed. Accordingly, the opening portion 72a is indicated by a dotted line. The opening portion 72a in order to get access to the electric component housing chamber 72 from the outside thereof. Further, the opening portion 72a is disposed at the position corresponding to an opening 27 formed in the working vehicle 1 when the battery cover 22 is opened, in a state where the battery pack 70 is placed on the working vehicle 1 and is disposed at the position higher than a lower end 27a of the opening 27 (see Fig. 2). The electric component housing chamber 72 is described in detail later.

In the space S2 and the space S3, the battery modules 73 are housed. A wall may be disposed between the space S2 and the space S3 such that the space S2 and the space S3 form the respectively independent spaces. Alternatively, no partition such as a wall may be disposed between the space S2 and the space S3 so that the space S2 and the space S3 are formed into one space.

### 1.2.2. Maintenance cover

The maintenance cover 75 can prevent an access to the electric component housing chamber 72 from the outside by closing the opening portion 72a by covering the maintenance cover 75. On the other hand, the maintenance cover 75 allows the access to the electric component housing chamber 72 from the outside by releasing the opening portion 72a by opening the maintenance cover 75.

As illustrated in Fig. 3 to Fig. 5, the maintenance cover 75 is configured to be capable of closing the opening portion 72a. To be more specific, the maintenance cover 75 has a size large enough to close the opening portion 72a and, at the same time, is disposed at the position where the maintenance cover 75 closes the opening portion 72a. The maintenance cover 75 illustrated in Fig. 3 to Fig. 5 has a rectangular shape. However, the shape of the maintenance cover 75 is not limited to such a shape. Provided that the maintenance cover 75 can close the opening portion 72a, the maintenance cover 75 can adopt various shapes such as a circular shape, a polygonal shape or the like.

In a state where the battery pack 70 is placed on the working vehicle 1, the maintenance cover 75 is disposed at a position that corresponds to the opening 27 formed when the battery cover 22 is opened at the time of getting access to the battery pack 70.

To be more specific, in the working vehicle 1, the battery cover 22 is configured to be openable and closable so as to enable maintenance operation of the battery pack 70. The maintenance cover 75 is disposed at the position of the opening 27 formed when the battery cover 22 is opened. With such a configuration, an operator can open or close the maintenance cover 75 without removing the battery pack 70 from the working vehicle 1.

Further, the maintenance cover 75 is disposed at the position higher than the lower end 27a of the opening 27. In the working vehicle 1 according to the embodiment, the lower end 27a of the opening 27 is divided as an upper end of the counterweight 29 (see Fig. 2). The maintenance cover 75 is disposed at the position higher than an upper edge of the counterweight 29 that extends in the vehicle width direction of the working vehicle 1.

With such a configuration, also in a case where the position at which the battery pack 70 in the working vehicle 1 is placed is disposed at the position lower than the lower end 27a of the opening 27, an operator can get accesses to the electric component housing chamber 72 from the outside without removing the battery pack 70 from the working vehicle 1. As a result, the maintenance of the electric components 74 housed in the electric component housing chamber 72 can be performed easily.

In the battery pack 70, a seal member 78 is disposed at the position where an outer peripheral portion of the opening portion 72a and an outer peripheral portion of the maintenance cover 75 overlap with each other when the maintenance cover 75 is closed. Provided that the seal member 78 has predetermined rigidity and predetermined flexibility, a seal member made of a desired material can be selected. As the seal member 78, for example, a packing, an O ring and the like made of a material such as rubber, sponge or urethane can be exemplified.

As illustrated in Fig. 4, the seal member 78 may be disposed on an outer peripheral portion of the opening portion 72a. Alternatively, although not illustrated in the drawing, the seal member 78 may be disposed on an outer peripheral portion of the maintenance cover 75.

With the provision of the seal member 78, when the maintenance cover 75 is fixed to the housing 71 using the bolts 77, the formation of a gap between the maintenance cover 75 and the housing 71 can be suppressed and hence, the intrusion of water, dirt and the like into the electric component housing chamber 72 can be suppressed.

The maintenance cover 75 is mounted on the housing 71 by the hinges 76. The maintenance cover 75 according to this embodiment is mounted on the housing 71 by the hinges 76 disposed on a left side of the maintenance cover 75 in a direction toward the battery pack 70.

By mounting the maintenance cover 75 on the housing 71 using the hinges 76, the maintenance cover 75 is supported on the housing 71 by way of the hinges 76. With such a configuration, the maintenance cover 75 can be easily opened or closed. Further, during a period that the maintenance of the electric components 74 is performed by opening the maintenance cover 75, it is unnecessary to prepare a place where the maintenance cover 75 is stored.

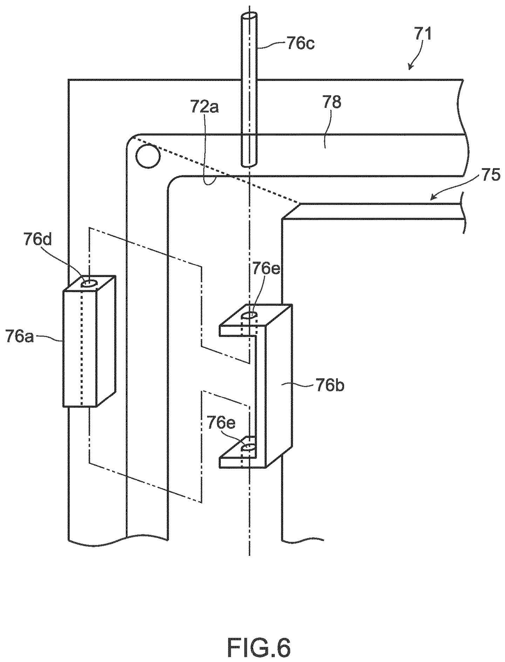

With respect to the hinge 76, as illustrated in Fig. 6, for example, it is possible to use the hinge 76 that is constituted of a square steel 76a, a bracket 76b and a pin 76c. Fig. 6 is a view illustrating the hinge 76 that can be preferably used in the battery pack 70 according to the embodiment.

The square steel 76a has a quadrangular columnar shape. The square steel 76a has a hole 76d having a size that allows the pin 76c to pass through the square steel 76a in a height direction of the quadrangular columnar shape. Further, the square steel 76a is mounted by welding to a peripheral edge of the opening portion 72a of the housing 71 of the battery pack 70.

As illustrated in Fig. 6, the bracket 76b has a shape where a square steel having a hole 76e on both ends of a plate-shaped members is raised. The pin 76c is made to pass through the holes 76e. The bracket 76b is mounted by welding to the maintenance cover 75.

The pin 76c is a member for joining the square steel 76a and the bracket 76b. The pin 76c is made to pass through the hole 76e formed in the bracket 76b and the hole 76d of the square steel 76a thus joining the square steel 76a and the bracket 76b.
With such a configuration, the maintenance cover 75 can be mounted on the housing 71 in an openable and closable manner.

The above-mentioned hinge 76 merely exemplifies an example of the hinge. Provided that the maintenance cover 75 can be mounted on the housing 71 in an openable and closable manner. Various known hinges can be used as the hinge 76.

It is preferred that the hinge 76 has a predetermined amount of "looseness". The "looseness" is also referred to as "backlash". To be more specific, when the hinge 76 is assembled, a gap is formed between the square steel 76a and the bracket 76b, and a gap is also formed between the pin 76c and the hole 76e formed in the bracket 76b.

As a result, the bracket 76b is configured to be movable by a predetermined amount in all directions that is, the vertical direction, the longitudinal direction and the lateral direction of the working vehicle 1. With such a configuration, the maintenance cover 75 can be moved, that is, moves with a backlash in all directions, that is, the vertical direction, the longitudinal direction and the lateral direction with respect to the housing 71.

The maintenance cover 75 is fixed to the housing 71 by a plurality of bolts 77 that pass through holes (see Fig. 4, symbols not indicated in the drawing) formed in the maintenance cover 75. The hinge 76 has "the looseness" and hence, at the time of fixing the maintenance cover 75 to the housing 71 by the plurality of bolts 77, it is possible to accurately align the position of the holes formed in the maintenance cover 75 and threaded holes (symbol not indicated in the drawing) formed in the housing 71. Accordingly, the maintenance cover 75 can be fixed to the housing 71 using the bolts 77 easily and with certainty.

Further, in a case where a seal member 78 is disposed at the position where the outer peripheral portion of the opening portion 72a and the outer peripheral portion of the maintenance cover 75 overlap with each other, when the hinge 76 does not have "looseness", there is a possibility that it is difficult to accurately align the position of the hole formed in the maintenance cover 75 and the position of the threaded hole (symbol not indicated in the drawing) formed in the housing 71 with each other. On the other hand, by providing the hinge 76 with "the looseness", it is possible to accurately align the position of the hole formed in the maintenance cover 75 and the position of the threaded hole formed in the housing 71 with each other. Accordingly, the maintenance cover 75 can be fixed to the housing 71 using the bolts 77 easily and with certainty.

The maintenance cover 75 may include accessories such as a service plug 79, a quick charging port 80 and the like on a surface 75a (see Fig. 3) in the state where the battery pack 70 is placed on the working vehicle 1, and the surface 75a is opposite the opening 27 formed in the maintenance cover 75.

### 1.2.3. electric component housing chamber

The electric component housing chamber 72 is, as described above, the space S1 that houses the electric components 74. As the electric components 74 housed in the electric component housing chamber 72, a fuse 74a, a contactor 74b and a board 74c on which an integrated circuit is mounted and the like can be enumerated.

Among the electric components 74, the fuse 74a and the contactor 74b are disposed on a surface 75b of the maintenance cover 75 that is opposite the electric component housing chamber 72 (hereinafter, "the surface 75b that is opposite the electric component housing chamber 72" being referred to as "the inner surface 75b on an inner side"). The inner surface 75b on an inner side of the maintenance cover 75 is a surface that is exposed to the outside of the electric component housing chamber 72 when the maintenance cover 75 is opened, and constitutes a part of an inner wall of the electric component housing chamber 72 when the maintenance cover 75 is closed.

With respect to the electric components 74, the fuse 74a and the contactor 74b are electric components that require the maintenance at high frequency among the electric components 74. By arranging the electric components 74 that require maintenance at high frequency on the inner surface 75b on an inner side of the maintenance cover 75, at the time of performing the maintenance of the electric components 74, a maintenance operation can be performed by exposing the fuse 74a and the contactor 74b to the outside of the electric component housing chamber 72. Accordingly, efficiency of the maintenance operation can be enhanced.

The electric components 74 arranged on the inner surface 75b on an inner side of the maintenance cover 75 are connected to terminals disposed on a housing 71 side by flexible electric wires 74d such that opening and closing of the maintenance cover 75 are not impaired. Further, the electric components 74 arranged on the maintenance cover 75 are mounted on the maintenance cover 75 (the inner surface 75b on an inner side of the maintenance cover 75) by way of a member that has insulation property and elasticity such as insulation rubber or the like not illustrated in the drawing.

Among the electric components 74, the board 74c on which an integrated circuit is mounted is disposed on a surface of a wall (not indicated by a symbol) of the electric component housing chamber 72 that differs from the surface 75b on an inner side of the maintenance cover 75. As described above, the electric component housing chamber 72 (space S1) is partitioned from the space S2 and the space S3 by the wall disposed in the space S formed inside the housing 71.

By arranging the board 74c on which the integrated circuit is mounted on the wall of the electric component housing chamber 72, an operator can get access to the board 74c at the time of performing the maintenance while effectively making use of the space in the electric component housing chamber 72.

Hereinafter, advantageous effects that the battery pack 70 according to the embodiment acquires are described.
[1] The battery pack 70 according to the embodiment includes the electric component housing chamber 72 that houses the electric components 74. The electric component housing chamber 72 has the opening portion 72a and the maintenance cover 75 that is configured to be capable of closing the opening portion 72a. The maintenance cover 75 is mounted on the housing 71 by the hinge 76. With such a configuration, the maintenance cover 75 can be easily opened or closed. Further, it is unnecessary to prepare a place where the maintenance cover 75 is stored during a period that the maintenance of the electric components 74 is performed by opening the maintenance cover 75. That is, according to the battery pack 70 of the embodiment, an operator can easily get access to the electric component housing chamber 72 in which the electric components 74 are housed and hence, it I possible to provide the battery pack 70 that enhances the maintenance property of the electric components 74.
[2] In the battery pack 70 according to the embodiment, the electric components 74 include at least either one of the fuse 74a and the contactor 74b. With respect to the electric components 74, the fuse 74a and the contactor 74b are electric components that require maintenance at high frequency among the electric components 74. Further, the electric components 74 are disposed on the surface (the surface 75b on an inner side) of the maintenance cover 75 that is opposite the electric component housing chamber 72. When the maintenance cover 75 is opened, the surface 75b on an inner side of the maintenance cover 75 is exposed to the outside of the electric component housing chamber 72. Accordingly, the maintenance operation of the electric components 74 that require the maintenance at high frequency can be performed in a state that the electric components 74 are exposed to the outside of the electric component housing chamber 72. Accordingly, the efficiency of the maintenance operation can be enhanced.
[3] In the battery pack 70 according to the embodiment, the electric components 74 include the board 74c on which the integrated circuit is mounted. The electric components 74 include are disposed on a wall (symbol being omitted) of the electric component housing chamber 72. Accordingly, an operator can get access to the board 74c at the time of maintenance while effectively making use of the space in the electric component housing chamber 72.
[4] In the battery pack 70 according to the embodiment, when the battery pack 70 is mounted on the working vehicle 1, the maintenance cover 75 is disposed at the position higher than the lower end 27a of the opening 27 formed when the battery cover 22 is opened in the working vehicle 1. Accordingly, even in a case where the battery pack 70 is mounted on the working vehicle 1, and the position at which the battery pack 70 is disposed in the working vehicle 1 is the position lower than the lower end 27a of the opening 27, an operator can get access to the electric component housing chamber 72 from the outside without removing the battery pack 70 from the working vehicle 1. As a result, the maintenance of the electric components 74 housed in the electric component housing chamber 72 can be performed easily.
[5] The working vehicle 1 according to the embodiment includes the battery pack 70 that includes the electric component housing chamber 72.
The electric component housing chamber 72 has: the opening portion 72a; and the maintenance cover 75 that is configured to be capable of closing the opening portion 72a. The maintenance cover 75 is mounted on the housing 71 by the hinge 76. Accordingly, the maintenance cover 75 can be easily opened or closed. Further, it is unnecessary to prepare a place where the maintenance cover 75 is stored during a period that the maintenance of the electric components 74 is performed by opening the maintenance cover 75. That is, according to the working vehicle 1 of the embodiment, an operator can easily get access to the electric component housing chamber 72 in which the electric components 74 are housed and hence, it is possible to provide the working vehicle 1 that includes the battery pack 70 where the maintenance property of the electric components 74 is enhanced.

The present invention is not limited to the above-mentioned embodiment, and various modifications can be carried out without departing from the gist of the present invention.

### [List of reference signs]

1: working vehicle
27: opening
27a: lower end of opening
70: battery pack
71: housing
72: electric component housing chamber
72a: opening portion
73: battery module
74: electric component
74a: fuse
74b: contactor
74c: board
75: maintenance cover
76: hinge

## Claims

1. A battery pack comprising:
a battery module;
an electric component; and
a housing that houses the battery module and the electric component, wherein
the housing includes an electric component housing chamber that houses the electric component,
the electric component housing chamber has an opening portion in order to get access to the electric component housing chamber from an outside thereof and a maintenance cover that is configured to be capable of closing the opening portion, and
the maintenance cover is mounted on the housing by a hinge.

2. The battery pack according to claim 1, wherein
the electric component includes a fuse or a contactor, and
the electric component is disposed on a surface of the maintenance cover that is opposite the electric component housing chamber.

3. The battery pack according to claim 1 or 2, wherein
the electric component includes a board on which an integrated circuit is mounted; and
the board is disposed on a wall of the electric component housing chamber.

4. The battery pack according to one of the preceding claims, wherein
the maintenance cover is disposed at a position higher than a lower end of an opening formed, when a battery cover is opened in a working vehicle, in a state where the battery pack is mounted on the working vehicle.

5. A working vehicle comprising a battery pack that includes a battery module; an electric component; and a housing that houses the battery module and the electric component, wherein
the housing includes an electric component housing chamber that houses the electric component,
the electric component housing chamber has: an opening portion in order to get access to the electric component housing chamber from an outside thereof and a maintenance cover that is configured to be capable of closing the opening portion, and
the maintenance cover is mounted on the housing by a hinge.
